# EUROPÄISCHE PATENTSCHRIFT

(11) **EP 3 067 602 B1**
(45) Veröffentlichungstag und Bekanntmachung des Hinweises auf die Patenterteilung: **08.05.2019**
(21) Anmeldenummer: 15158553.6
(22) Anmeldetag: 11.03.2015
(51) Int. Cl.: F16K 37/00, F16K 31/04

(54) **Ventilantrieb mit Lichtleiter**
DRIVE WITH LIGHT GUIDE
ENTRAÎNEMENT POUR CONDUCTEUR LUMINEUX

(43) Veröffentlichungstag der Anmeldung: 14.09.2016
(73) Patentinhaber: Georg Fischer Rohrleitungssysteme AG, 8201 Schaffhausen (CH)
(72) Erfinder: Stumpp, Jürgen, 79771 Klettgau (DE); Bürgi, Stefan, 8254 Basadingen (CH)
(74) Vertreter: Fenner, Seraina

(56) Entgegenhaltungen:
- WO-A1-2008/138374
- DE-B4- 10 322 832
- US-A1- 2014 096 850

## Beschreibung

Die Erfindung betrifft eine Vorrichtung zur Betätigung eines Ventils beinhaltend ein Gehäuse, wobei das Gehäuse einen Klarsichtbereich aufweist und das Gehäuse vorzugsweise aus einem Ober-und Unterteil gebildet ist, eine Getriebebaugruppe, einen Elektromotor und eine Basisplatine zur Befestigung von elektrischen Bauteilen, wobei im Gehäuse vorzugsweise auf der Basisplatine LEDs oder eine mehrfarbige LED und ein Lichtleiter angeordnet sind, wobei durch Leuchten der LEDs die Stellung oder eine andere Funktion des Ventils angezeigt wird und der Lichtleiter das Licht der LEDs zur Stellungs-oder Fehlfunktionsanzeige bündelt und fokussiert.

Ventile werden in Rohrleitungssystemen eingesetzt um den Durchfluss von Fluiden zu regeln. Dazu werden bspw. Kugelventile, Absperrklappen, Schrägsitzventile, Membranventile usw. eingesetzt. Solche Ventile kommen unteranderem in der chemischen Prozessindustrie, für die Wasseraufbereitung, in Kraftwerken, für Kühl- oder Regelapplikationen usw. zur Anwendung. Derartige Ventile können manuell, pneumatisch oder elektrisch gesteuert werden. Bei automatisch gesteuerten Anlagen werden elektrisch angetriebene Ventile bevorzugt. Die Ventile können zentral geregelt werden und werden mittels einer Betätigungsvorrichtung angetrieben, die einen Elektromotor aufweisen, der das Ventil über ein Getriebe betätigt.

Solche elektrischen Antriebe sind aus dem Stand der Technik bekannt. Die DE 103 22 832 B4 offenbart einen elektrischen Antrieb für ein Ventil mit Handbetätigung. Die Stellung des Ventils ist durch eine durchsichtige Abdeckung im elektrischen Antrieb ersichtlich. Durch die durchsichtige Abdeckung ist eine Stellanzeige erkennbar, die anhand der Stellung des Ventils bspw. offen oder geschlossen, in die entsprechende Richtung zeigt wo die entsprechende Stellung vermerkt ist. Das heisst, die Stellungsanzeige dreht sich in die entsprechende Position bzw. wird über das Getriebe ebenfalls mitgedreht wie das Absperrorgan des Ventils und ist dann entsprechend auf eine mögliche Beschriftung "open" oder "close" ausgerichtet.

Nachteilig hierbei ist, dass in einem schlecht beleuchteten Raum die Stellungsanzeige kaum erkennbar ist sowie auch aus grosser Distanz die Stellung des Ventils nicht erkannt werden kann.

Es ist Aufgabe der Erfindung eine Vorrichtung zur Betätigung eines Ventils vorzuschlagen bei dem die Stellung des Ventils bzw. eine Stellungsrückmeldung gut und auch in dunkler Umgebung erkennbar ist sowie aber auch keine übermässige Beleuchtung durch mehrere Rückmeldesignale bei grösseren Anlagen mit mehreren Ventilen erzeugt werden soll. Zudem soll dazu möglichst wenig Energie benötigt werden.

Die Aufgabe wird dadurch gelöst, dass dass im Gehäuse eine Stellungsanzeige angeordnet ist, wobei der Lichtleiter im Hintergrund der Stellungsanzeige angeordnet ist.

Die Vorrichtung zur Betätigung eines Ventils beinhaltet ein Gehäuse, wobei das Gehäuse vorzugsweise aus einem Oberteil und Unterteil gebildet wird. Das Gehäuse ist vorzugsweise aus Kunststoff im Spritzgussverfahren hergestellt. Selbstverständlich kann das Gehäuse auch aus mehreren Teilen als aus zwei Teilen gebildet werden, dies ist abhängig von der Komplexität des Gehäuses, der an-und einzubauenden Komponenten sowie dem anzutreibenden Ventil. Zudem weist das Gehäuse einen Klarsichtbereich auf. Das Gehäuseunterteil weist eine Aufnahme auf, die es ermöglicht die erfindungsgemässe Vorrichtung auf ein Ventil aufzusetzen und damit zu koppeln. Vorzugsweise ist die Aufnahme derart ausgebildet, dass sie mit jeglichen Ventilen kompatibel ist, wodurch die erfindungsgemässe Vorrichtung universal einsetzbar ist. Die Aufnahme ist vorzugsweise an der untern Grundplatte der Getriebebaugruppe angeordnet.

Die erfindungsgemässe Vorrichtung weist zudem eine Getriebebaugruppe auf, welche dem Antrieb des Ventils dient, das mittels eines Elektromotors angetrieben wird. Die Getriebebaugruppe weist vorzugsweise eine obere und untere Grundplatte auf zwischen denen die Zahnräder zur gewünschten Kraftunterstützung angeordnet sind. Alternative Bauweisen einer solchen Getriebebaugruppe sind selbstverständlich denkbar. Die Grundplatten sind mittels Distanzbolzen voneinander beanstandet damit die Zahnräder dazwischen angeordnet werden können.
Vorteilhaft ist es, wenn der Elektromotor auf der oberen Grundplatte der Getriebebaugruppe befestigt ist und die Antriebswelle durch die obere Grundplatte ragt und mittels darauf angeordnetem Zahnrad mit einem Zahnrad der Getriebebaugruppe kämmt.
Als vorteilhaft hat sich gezeigt, dass die Getriebebaugruppe eine obere Grundplatte und eine untere Grundplatte aufweist zwischen denen Zahnräder zur Kraftübertragung des Elektromotors auf das anzutreibende Ventil angeordnet sind. Alternative Ausgestaltungen der Getriebebaugruppe sind denkbar.
Vorzugsweise werden die obere und untere Grundplatte der Getriebebaugruppe durch Distanzbolzen voneinander beanstandet.

Als mögliche Anordnung der Basisplatine hat sich gezeigt, dass die Basisplatine auf einer Trägerplatte, vorzugsweise aus Kunststoff, aufliegt. Die Trägerplatte ist auf der oberen Grundplatte der Getriebegruppe angeordnet, dies ermöglicht eine optimale und passgenaue Anordnung der Basisplatine im Gehäuse.

Die erfindungsgemässe Vorrichtung weist zudem eine Basisplatine auf, auf welcher die benötigten elektrischen Bauteile angeordnet sind. Unter anderem sind LEDs bzw. eine mehrfarbige LED auf der Basisplatine angeordnet die durch ihr Leuchten die entsprechende Stellung oder eine Funktion wie bspw. eine Fehlfunktion des Ventils anzeigen. Bspw. steht das Ventil, egal ob Absperrklappe, Kugelventil, Membranventil oder sonst einem Ventil zur Durchflussregelung offen, wenn eine grüne LED leuchtet und bspw. beim Leuchten einer roten LED wird angezeigt, dass das Ventil geschlossen ist. Die Farbzuordnungen zu den entsprechenden Ventilstellungen und/oder Funktionen können natürlich individuell gewählt werden wie auch Zwischenstellungen des Ventils angezeigt werden können. Es besteht auch die Möglichkeit durch Blinken der LEDs bspw. eine Fehlfunktion des Ventils anzuzeigen wie z.B. dass das Ventil sich nicht schliessen lässt. Selbstverständlich sind auch andere Funktionen durch Blinken der LEDs anzeigbar.

Das Leuchten der LEDs soll mittels eines Lichtleiters der ebenfalls im Gehäuse angeordnet ist gebündelt, fokussiert und dadurch deutlicher erkennbar gemacht werden. Der Lichtleiter ist vorzugsweise auch auf der Basisplatine angeordnet. Vorteilhaft ist es, wenn der Lichtleiter nur auf der Basisplatine eingesteckt werden muss und durch seine Formgestaltung um die Stellungsanzeigewelle zentriert und positioniert ist.

Vorteilhaft an der Bündelung des Lichts bzw. der Fokussierung des Lichts mittels des Lichtleiters ist, dass dadurch besser erkannt werden kann ob die LED bzw. der angestrahlt Lichtleiter leuchtet. Da eine LED meist nur breit abstrahlt ist das Licht ohne einen Lichtleiter als bündelndes Element nur schlecht erkennbar. Des Weiteren wird die Umgebung, durch die gezielte Fokussierung des Lichts mittels Lichtleiters, nicht übermässig beleuchtet und somit kann eine mögliche Verwirrung durch das Leuchten vieler LEDs oder anderer leuchtender Anzeigemöglichkeiten in grossen Anlagen vermieden werden.

Da die Basisplatine im unteren Bereich des Gehäuses bzw. im Unterteil des Gehäuses angeordnet ist und vorzugsweise darauf die leuchtenden LEDs befestigt sind, ist die Distanz bis zum Klarsichtbereich im Gehäuse bzw. im Gehäuseoberteil relativ gross. Der Lichtleiter dient hier auch der Distanzüberbrückung des Lichts und leitet es durch seine entsprechende Formgestaltung so näher an den Klarsichtbereich im Gehäuse.
Durch den Einsatz von LEDs und Lichtleiter kann auf stark leuchtende Elemente, die viel Energie benötigen verzichtet werden.

Als weitere Ausgestaltung ist im Gehäuse eine Stellungsanzeige angeordnet. Sie dient der Stellungsanzeige des Ventils. Das heisst, analog der LEDs gibt auch die Stellungsanzeige die Stellung des Ventils an, wobei diese Anzeige rein mechanisch erfolgt. Die Stellenanzeige auf der bspw. ein Pfeil oder eine blosse Linie als anzeigendes Symbol aufgebracht ist, dreht sich entsprechend bzw. wird über das Getriebe entsprechend dem Ventil in die Stellung in die das Ventil gebracht wird ausgerichtet. Die Stellungsanzeige entspricht einer üblichen Drehanzeige, die durch Drehen, das darauf angebrachte Anzeigesymbol in die Richtung lenkt, wo die Angabe die entsprechende Stellung des Ventils angibt. Die Stellungsanzeige ist am oberen Ende der Stellungsanzeigewelle angeordnet, wobei die Stellungsanzeigewelle mit dem Getriebe verbunden ist, so dass die Stellung des Ventils durch die Stellungsanzeige mittels der Stellungswelle übertragen und angezeigt wird.

Durch den Klarsichtbereich, welcher vorzugsweise als Schauglas ausgebildet ist, ist die Stellungsanzeige im Inneren des Gehäuses ersichtlich. Das Schauglas ist als separates Teil ausgebildet und kann im Gehäuse durch einklipsen, einschrauben, einkleben, einpressen oder direkt im Spritgiessprozess durch umspritzen im Oberteil des Gehäuses angebracht werden, wobei die Anordnung des Schauglases im Gehäuse entsprechend der Position der Stellungsanzeige und dem Lichtleiter im Gehäuse zu wählen ist.

Als vorteilhaft hat sich gezeigt, dass der Lichtleiter im Hintergrund bzw. im hinteren Bereich der Stellungsanzeige anzuordnen ist. Dadurch wird die Stellungsanzeige entsprechend von hinten beleuchtet, dass z.B. bei geöffnetem Ventil die Stellungsanzeige auf "offen" steht und eine grüne LED leuchtet und das Licht über den Lichtleiter im Hintergrund der Stellungsanzeige gut erkennbar ist.

Der Lichtleiter ist vorzugsweise aus Plexiglas oder transparentem Polycarbonat hergestellt.

Die Erfindung zeichnet sich dadurch aus, dass der Lichtleiter, der vorzugsweise im Spritzgussverfahren hergestellt wird, sich entsprechend des vorhandenen Platzes und den Gegebenheiten in der Betätigungsvorrichtung gestalten lässt. Wodurch die Formgestaltung des Lichtleiters individuell sein kann und den Anforderungen anzupassen ist.

Eine bevorzugte Ausgestaltung des Lichtleiters besteht darin, dass der Lichtleiter einen geraden Bereich und einen kreisförmigen Bereich aufweist. Die beiden Bereiche schliessen aneinander an. Der gerade Bereich dient der Distanzüberbrückung zwischen Basisplatine und Schauglas. Der anschliessende kreisförmige Bereich dient der optimalen Ausleuchtung des Schauglases. Zudem weist der kreisförmige Bereich am äusseren Ring noch Rillen auf, die eine Struktur auf der unteren Seite des äusseren Ringes bildet um das Licht gleichmässige auszukoppeln. Der Lichtleiter weist zudem im kreisförmigen Bereich einen Innenring auf, der der Zentrierung und Positionierung des Lichtleiters dient. Mittels des Innenringes wird der Lichtleiter um die Stellanzeigenwelle zentriert. Der Innenring ist konzentrisch zum äusseren Ring angeordnet und mittels Stege verbunden. Am anderen Ende des geraden Bereichs sind Positionsstifte angeordnet mittels derer der Lichtleiter auf der Basisplatine positioniert wird.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt einer erfindungsgemässen Vorrichtung und
- Fig. 2: eine dreidimensionale Ansicht eines Lichtleiters der erfindungsgemässen Vorrichtung.

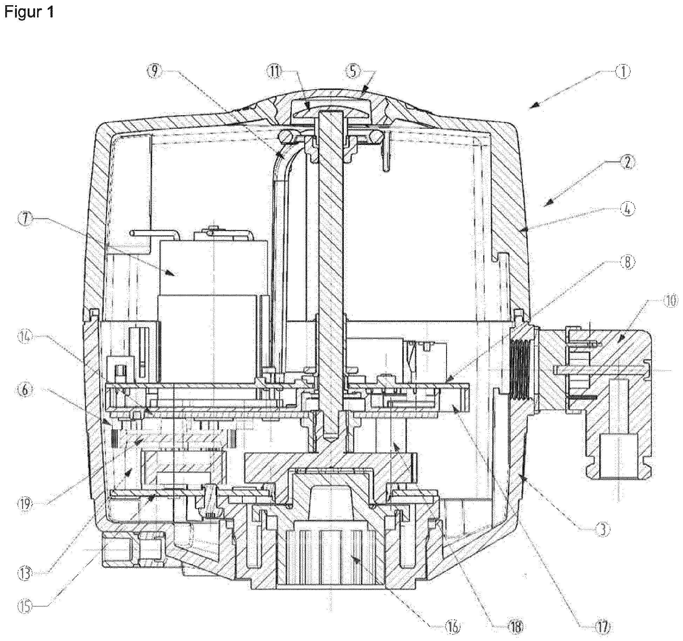

In Fig. 1 ist eine erfindungsgemässe Vorrichtung 1 zur Betätigung eines Ventils dargestellt, wobei die Vorrichtung 1 für unterschiedliche Ventile (nicht dargestellt) eingesetzt werden kann. Bspw. kann sie zur Betätigung von Kugelventilen, Absperrklappen, Membranventilen, usw. eingesetzt werden.
Die Vorrichtung wird vorzugsweise elektrisch betrieben, wobei auch pneumatische oder manuelle Vorrichtungen denkbar wären, wobei es dann auch dort jeweils der Zuführung von elektrischem Strom bedürfte was bei einer elektrischen Vorrichtung 1 zur Betätigung eines Ventils bereits vorliegt. Die Zuführung des elektrischen Stroms führt über die dafür vorgesehenen Anschlüsse 10, die vorzugsweise direkt am Gehäuse 2 verschraubt werden können. Das Gehäuse 2 der erfindungsgemässen Vorrichtung 1 besteht vorzugsweise aus einem oberen Teil 4 und einem unteren Teil 3, wobei auch andere Aufbauart des Gehäuses denkbar sind. In der vorliegenden Ausgestaltung des Gehäuses 2 befindet sich im Oberteil 4 ein Klarsichtbereich 5 der durch ein Schauglas 5 gebildet wird. Durch dieses Schauglas 5, welches durch individuelle Ausgestaltung am Gehäuse 2 zu befestigen ist, ist die Stellungsanzeige 11 bzw. die die Stellungsrückmeldeanzeige ersichtlich. Diese widerspiegelt die Stellung des Ventils. Das heisst, wenn das Ventil bspw. geöffnet ist, ist das Anzeigesymbol auf der Stellungsanzeige 11 auf die Angabe "offen" gerichtet. Die Stellungsanzeige 11 entspricht einer Drehanzeige wie sie aus dem Stand der Technik bekannt ist. Die Stellungsanzeige 11 ist am oberen Ende der Stellungsanzeigewelle 12 angeordnet, direkt unterhalb des Schauglases 5. Das andere Ende der Stellungsanzeigewelle 12 ist mit dem Getriebe 13 der Getriebebaugruppe 6 gekoppelt und wird ebenfalls mittels des Getriebes 13 betätigt. Das Getriebe 13 ist in einer Getriebebaugruppe 6 angeordnet, wobei die einzelnen Zahnräder 19 zwischen einer oberen und unteren Grundplatte 14, 15 angeordnet sind die mittels Distanzbolzen 18 voneinander beabstandet sind. Auch andere Bauformen der Getriebebaugruppe 6 sind denkbar und in das Gehäuse 2 einbaubar. Damit die erfindungsgemässe Vorrichtung 1 auch problemlos auf die Ventile adaptierbar ist, weist sie eine Aufnahme 16 auf, die an der unteren Grundplatte 15 befestigt ist und aus dem Gehäuse 2 bzw. Gehäuseunterteil 3 ragt.
Zum Antreiben des Ventils bzw. des Getriebes 13 wird ein Elektromotor 7 eingesetzt, der vorzugsweise an der oberen Grundplatte 14 befestigt ist und das am Antriebswellenende (nicht sichtbar) des Elektromotors 7 angeordnete Zahnrad (nicht sichtbar) kämmt entsprechend mit dem Getriebe 13.

Vorzugsweise ist im Unterteil 3 des Gehäuses 2 die Basisplatine 8 angeordnet. Dadurch dass die Basisplatine 8 im Unterteil 3 angeordnet ist, ist eine einfache Montage und eine gute Zugänglichkeit der darauf angeordneten elektrischen Elemente wie auch der LEDs (nicht dargestellt) gewährleistet. Natürlich können die LEDs auch separat auf eine Platine angeordnet werden die näher am Klarsichtbereich des Gehäuses liegt. Dies wäre aber wiederum ein zusätzlicher Montageaufwand und würde den Aufbau verkomplizieren. Damit die Basisplatine 8 optimal im Gehäuseunterteil 3 angeordnet ist, liegt sie auf einer Trägerplatte 17 auf, die wiederum auf der oberen Grundplatte 14 der Getriebebaugruppe 6 angeordnet ist.

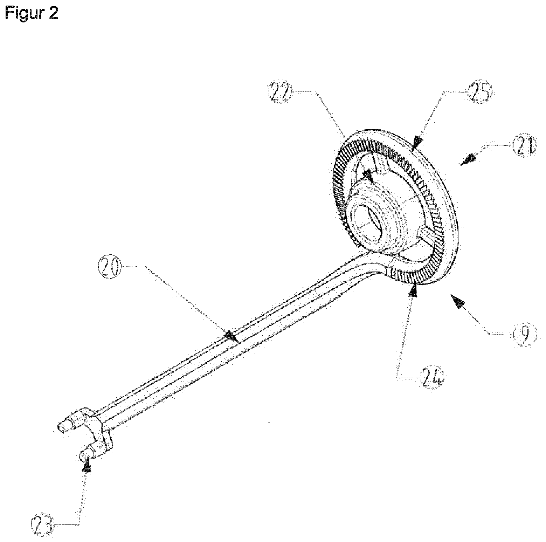

Der Lichtleiter 9 ist vorzugsweise durch Einstecken in die Basisplatine 8 zu fixieren. Der Lichtleiter 9 wird in dieser Ausführungsform der erfindungsgemässen Vorrichtung 1 an der Stellanzeigewelle 12 zentriert und ist durch das Einstecken in die Basisplatine 8 und die Zentrierung an der Stellungsanzeigewelle 12 richtig positioniert. Da eine relativ grosse Distanz zwischen der Basisplatine 8 und dem Klarsichtbereich 5 bzw. Schauglas 5 vorliegt, sind die auf der Basisplatine 8 montierten LEDs, die zur Stellungsanzeige des Ventils dienen kaum ersichtlich. Die LEDs sollen durch Leuchten die Stellung des Ventils anzeigen bzw. dienen als Stellungrückmeldeanzeige des Ventils wie auch Fehlfunktionen angezeigt werden können. Das heisst, dass bspw. bei einem geöffneten Ventil eine grüne LED leuchtet. Dies hat den Vorteil gegenüber der rein mechanischen Stellungsanzeige 11, dass die Stellung auch im Dunkeln oder bei schlechter Beleuchtung erkennbar ist. Jedoch leuchten solche LEDs meist zu diffus um aus einer gewissen Distanz zu erkennen ob und was leuchtet. Deshalb weist die erfindungsgemässe Vorrichtung 1 einen Lichtleiter 9 auf. Dieser bündelt und fokussiert das Licht der LEDs die auf der Basisplatine 8 angeordnet sind zum Schauglas 5. Der Lichtleiter 9 weist vorzugsweise für diese Ausführungsform der erfindungsgemässen Vorrichtung 1 einen geraden Bereich 20 auf der die Distanz von der Basisplatine 8 zum Schauglas 5 überbrückt. Der obere Bereich 21 des Lichtleiters 9 ist kreisförmig ausgebildet um das komplette Schaumglas 5 optimal auszuleuchten. Der Innenring 22 dient der Führung bzw. der Zentrierung des Lichtleiters 9 an der Stellanzeigewelle 12 wie zuvor beschrieben.
Am unteren Ende des Lichtleiters 9 sind die Positionsstifte 23 angeordnet um den Lichtleiter 9 auf der Basisplatine 8 zu befestigen. Durch die Anordnung von Rillen zu einer Struktur 24 im kreisförmigen Bereich 21 des Lichtleiters 9 wird das Licht optimal entlang der Kreisform geleitet und das Ausleuchten des Schauglases 5 optimiert. Durch den Einsatz des Lichtleiters 9 wird somit die Leuchtkraft der LEDs konzentriert und zugleich fokussiert wodurch keine unnötige Umgebungsbeleuchtung stattfindet sowie auch der Energieaufwand minimal ist. Eine bevorzugte Ausgestaltung eines Lichtleiters 9 ist in Fig. 2 gut erkennbar.
Der kreisförmige Bereich des Lichtleiters 9 ist vorzugsweise in eingebautem Zustand hinter der Stellungsanzeige 11 angeordnet und beleuchtet diese von hinten. Dadurch, dass die mechanische Stellungsanzeige 11, die Stellungsanzeigewelle 12 und auch der Lichtleiter 9 im Gehäuseinneren angeordnet sind, treten auch keine weiteren abzudichtenden Stellen am Gehäuse 2 auf. Selbstverständlich ist die Form des Lichtleiters 9 dem Gehäuse 2 und den Gegebenheiten anzupassen.

### Bezugszeichenliste

- 1: Vorrichtung
- 2: Gehäuse
- 3: Unterteil Gehäuse
- 4: Oberteil Gehäuse
- 5: Klarsichtbereich / Schauglas
- 6: Getriebebaugruppe
- 7: Elektromotor
- 8: Basisplatine
- 9: Lichtleiter
- 10: Anschluss zum Anschliessen der Energieversorgung
- 11: Stellungsanzeige bzw. Stellungsrückmeldeanzeige
- 12: Stellungsanzeigewelle
- 13: Getriebe
- 14: Obere Grundplatte
- 15: Untere Grundplatte
- 16: Aufnahme
- 17: Trägerplatte
- 18: Distanzbolzen
- 19: Zahnräder
- 20: gerader Bereich Lichtleiter
- 21: kreisförmiger Bereich Lichtleiter
- 22: Innenring
- 23: Positionsstifte
- 24: Rillen/ Struktur
- 25: äusserer Ring

## Patentansprüche

1. Vorrichtung (1) zur Betätigung eines Ventils beinhaltend ein Gehäuse (2), wobei das Gehäuse (2) einen Klarsichtbereich (5) aufweist und das Gehäuse (2) vorzugsweise aus einem Ober-(4) und Unterteil (3) gebildet ist, eine Getriebebaugruppe (6), einen Elektromotor (7) und eine Basisplatine (8) zur Befestigung von elektrischen Bauteilen, **dadurch gekennzeichnet, dass** im Gehäuse (2), vorzugsweise auf der Basisplatine (8), LEDs oder eine mehrfarbige LED und ein Lichtleiter (9) angeordnet sind, wobei durch Leuchten der LEDs die Stellung oder eine andere Funktion des Ventils angezeigt wird und der Lichtleiter (9) das Licht der LEDs zur Stellungs-oder Fehlfunktionsanzeige bündelt und fokussiert, wobei im Gehäuse (2) eine Stellungsanzeige (11) angeordnet ist, wobei der Lichtleiter (9) im Hintergrund der Stellungsanzeige (11) angeordnet ist.

2. Vorrichtung (1) zur Betätigung eines Ventils nach Anspruch 1, **dadurch gekennzeichnet, dass** die Getriebebaugruppe (6) eine obere Grundplatte (14) und eine untere Grundplatte (15) aufweist, wobei zwischen der oberen Grundplatte (14) und der unteren Grundplatte (15) Zahnräder (19) zur Kraftübertragung des Elektromotors (7) auf das anzutreibende Ventil angeordnet sind.

3. Vorrichtung (1) zur Betätigung eines Ventils nach einem der Ansprüche 1 oder 2, **dadurch gekennzeichnet, dass** die obere Grundplatte (14) und die untere Grundplatte (15) durch Distanzbolzen (18) voneinander beabstandet sind.

4. Vorrichtung (1) zur Betätigung eines Ventils nach einem der Ansprüche 1 bis 3, **dadurch gekennzeichnet, dass** die Basisplatine (8) auf einer Trägerplatte (17) aufliegt, wobei die Trägerplatte (17) auf der oberen Grundplatte (14) der Getriebebaugruppe (6) angeordnet ist.

5. Vorrichtung (1) zur Betätigung eines Ventils nach einem der vorangehenden Ansprüche, **dadurch gekennzeichnet, dass** der Klarsichtbereich (5) im Gehäuse (2) als Schauglas ausgebildet ist, wobei das Schauglas (5) zur Erkennung der Stellungsanzeige (11) dient.

6. Vorrichtung (1) zur Betätigung eines Ventils nach einem der vorangehenden Ansprüche, **dadurch gekennzeichnet, dass** die LEDs auf der Basisplatine (8) angeordnet sind.

7. Vorrichtung (1) zur Betätigung eines Ventils nach einem der vorangehenden Ansprüche, **dadurch gekennzeichnet, dass** der Lichtleiter (9) aus Plexiglas oder transparentem Polycarbonat gebildet ist.

8. Vorrichtung (1) zur Betätigung eines Ventils nach einem der vorangehenden Ansprüche, **dadurch gekennzeichnet, dass** der Lichtleiter (9) als Spritzgussteil ausgebildet ist.

9. Vorrichtung zur Betätigung eines Ventils nach einem der vorangehenden Ansprüche, **dadurch gekennzeichnet, dass** der Elektromotor (7) auf der oberen Grundplatte (14) der Getriebebaugruppe (6) angeordnet ist.

10. Vorrichtung (1) zur Betätigung eines Ventils nach einem der vorangehenden Ansprüche, **dadurch gekennzeichnet, dass** der Lichtleiter (9) einen geraden Bereich (20) und einen kreisförmigen Bereich (21) aufweist.

11. Vorrichtung (1) zur Betätigung eines Ventils nach einem der vorangehenden Ansprüche, **dadurch gekennzeichnet, dass** der Lichtleiter (9) im kreisförmigen Bereich (21) einen Innenring (22) und einen äusseren Ring (25) aufweist.

12. Vorrichtung (1) zur Betätigung eines Ventils nach einem der vorangehenden Ansprüche, **dadurch gekennzeichnet, dass** im kreisförmigen Bereich (21) vorzugsweise am äusseren Ring (25) Rillen (24) angeordnet sind, wobei die Rillen (24) vorzugsweise eine Struktur (24) bilden.

## Claims

1. Device (1) for actuating a valve, comprising a casing (2), said casing (2) exhibiting a transparent region (5) and said casing (2) preferentially having been formed from an upper part (4) and a lower part (3), a transmission assembly (6), an electric motor (7) and a base board (8) for attaching electrical components, **characterized in that** LEDs or a multicolour LED and an optical waveguide have been arranged in the casing, preferentially on the base board, the position or another function of the valve being indicated by the LEDs lighting up, and the optical waveguide collimating and focusing the light of the LEDs for the purpose of indicating the position or malfunction, a position indicator (11) having been arranged in the casing (2), the optical waveguide (9) having been arranged in the background of the position indicator (11).

2. Device (1) for actuating a valve, according to Claim 1, **characterized in that** the transmission assembly (6) exhibits an upper base plate (14) and a lower base plate (15), gearwheels (19) for transmitting the power of the electric motor (7) to the valve to be driven having been arranged between the upper base plate (14) and the lower base plate (15).

3. Device (1) for actuating a valve, according to one of Claims 1 and 2, **characterized in that** the upper base plate (14) and the lower base plate (15) have been spaced from one another by spacer bolts (18).

4. Device (1) for actuating a valve, according to one of Claims 1 to 3, **characterized in that** the base board (8) rests on a carrier plate (17), said carrier plate (17) having been arranged on the upper base plate (14) of the transmission assembly (6).

5. Device (1) for actuating a valve, according to one of the preceding claims, **characterized in that** the transparent region (5) in the casing (2) takes the form of inspection glass, said inspection glass (5) serving for discerning the position indicator (11).

6. Device (1) for actuating a valve, according to one of the preceding claims, **characterized in that** the LEDs have been arranged on the base board (8).

7. Device (1) for actuating a valve, according to one of the preceding claims, **characterized in that** the optical waveguide (9) has been formed from Plexiglas or transparent polycarbonate.

8. Device (1) for actuating a valve, according to one of the preceding claims, **characterized in that** the optical waveguide (9) takes the form of an injection moulding.

9. Device for actuating a valve, according to one of the preceding claims, **characterized in that** the electric motor (7) has been arranged on the upper base plate (14) of the transmission assembly (6).

10. Device (1) for actuating a valve, according to one of the preceding claims, **characterized in that** the optical waveguide (9) exhibits a straight region (20) and a circular region (21).

11. Device (1) for actuating a valve, according to one of the preceding claims, **characterized in that** the optical waveguide (9) exhibits an inner ring (22) and an outer ring (25) in the circular region (21).

12. Device (1) for actuating a valve, according to one of the preceding claims, **characterized in that** grooves (24) have been arranged in the circular region (21), preferentially on the outer ring (25), said grooves (24) preferentially forming a structure (24).

## Revendications

1. Dispositif (1) d'actionnement d'une vanne comprenant un boîtier (2), le boîtier (2) comportant une zone transparente (5) et le boîtier (2) étant de préférence formé d'une partie supérieure (4) et d'une partie inférieure (3), un ensemble de transmission (6), un moteur électrique (7) et une carte de base (8) destinée à la fixation de composants électriques, **caractérisé en ce que** des LED ou une LED multicolore et un guide de lumière (9) sont disposées dans le boîtier (2), de préférence sur la carte de base (8), la position ou une autre fonction de la vanne étant indiquée par éclairement des LED et le guide de lumière (9) focalisant et concentrant la lumière des LED pour l'indication de position ou de dysfonctionnement, un indicateur de position (11) étant disposé dans le boîtier (2), le guide de lumière (9) étant disposé dans le fond de l'indicateur de position (11).

2. Dispositif (1) d'actionnement d'une vanne selon la revendication 1, **caractérisé en ce que** l'ensemble de transmission (6) comprend une plaque de base supérieure (14) et une plaque de base inférieure (15), des roues dentées (19) destinées à transmettre la puissance du moteur électrique (7) à la vanne à entraîner étant disposées entre la plaque de base supérieure (14) et la plaque de base inférieure (15).

3. Dispositif (1) d'actionnement d'une vanne selon l'une des revendications 1 ou 2, **caractérisé en ce que** la plaque de base supérieure (14) et la plaque de base inférieure (15) sont espacées l'une de l'autre par des boulons d'écartement (18).

4. Dispositif (1) d'actionnement d'une vanne selon l'une des revendications 1 à 3, **caractérisé en ce que** la plaque de base (8) est en appui sur une plaque de support (17), la plaque de support (17) étant disposée sur la plaque de base supérieure (14) de l'ensemble de transmission (6).

5. Dispositif (1) d'actionnement d'une vanne selon l'une des revendications précédentes, **caractérisé en ce que** la zone transparente (5) dans le boîtier (2) est conçue comme un verre de regard, le verre de regard (5) servant à percevoir l'indicateur de position (11).

6. Dispositif (1) d'actionnement d'une vanne selon l'une des revendications précédentes, **caractérisé en ce que** les LED sont disposées sur la carte de base (8).

7. Dispositif (1) d'actionnement d'une vanne selon l'une des revendications précédentes, **caractérisé en ce que** le guide de lumière (9) est en plexiglas ou en polycarbonate transparent.

8. Dispositif (1) d'actionnement d'une vanne selon l'une des revendications précédentes, **caractérisé en ce que** le guide de lumière (9) est réalisé sous la forme d'une pièce moulée par injection.

9. Dispositif d'actionnement d'une vanne selon l'une des revendications précédentes, **caractérisé en ce que** le moteur électrique (7) est monté sur la plaque de base supérieure (14) de l'ensemble de transmission (6).

10. Dispositif (1) d'actionnement d'une vanne selon l'une des revendications précédentes, **caractérisé en ce que** le guide de lumière (9) comporte une zone rectiligne (20) et une zone circulaire (21).

11. Dispositif (1) d'actionnement d'une vanne selon l'une des revendications précédentes, **caractérisé en ce que** le guide de lumière (9) comporte dans la zone circulaire (21) une bague intérieure (22) et une bague extérieure (25).

12. Dispositif (1) d'actionnement d'une vanne selon l'une des revendications précédentes, **caractérisé en ce que** des rainures (24) sont ménagées dans la zone circulaire (21) de préférence au niveau de la bague extérieure (25), les rainures (24) formant de préférence une structure (24).
